# DEMANDE DE BREVET EUROPEEN

(11) **EP 4 567 999 A1**
(43) Date de publication de la demande: **11.06.2025**
(21) Numéro de dépôt: 24216024.0
(22) Date de dépôt: 28.11.2024
(51) Int. Cl.: H01M 50/503, H01M 50/211, H01M 50/521, H01M 50/553, H01M 50/548, H01M 50/514

(54) **DISPOSITIF DE RACCORDEMENT ÉLECTRIQUE D'UNE CELLULE D'ACCUMULATEUR À BORNE SOUPLE**

(30) Priorité: 04.12.2023 FR 2313498
(71) Demandeur: Commissariat à l'Energie Atomique et aux Energies Alternatives, 75015 Paris (FR)
(72) Inventeur: DE PAOLI, Lionel, 38054 Grenoble cedex 09 (FR); MEE, Fabrice, 38054 Grenoble cedex 09 (FR); DREVARD, Pascal, 38054 Grenoble cedex 09 (FR)
(74) Mandataire: Brevalex

(57) **Abrégé**

Dispositif de raccordement (18) pour une borne (16) en forme de feuille de matériau conducteur orientée horizontalement, le dispositif de raccordement comportant : un boitier (20) en matériau isolant électriquement délimitant un logement primaire (22) recevant au moins partiellement ladite borne (16) ; un organe de contact (32) en matériau conducteur, porté par le boitier (20) et comportant une extrémité (34) qui est mobile dans le boitier (20) entre une position de déconnexion dans laquelle il est situé verticalement à distance de la borne (16) et une position de connexion dans laquelle ladite extrémité (34) est en appui verticalement contre la borne (16) ; et un outil (38) de commande, mobile par rapport au boitier (20) entre une position de déconnexion dans laquelle l'outil est situé à distance de l'organe de contact (32) et une position de connexion dans laquelle l'outil peut déplacer l'organe de contact depuis sa position de déconnexion vers la position de connexion.

## Description

### DOMAINE TECHNIQUE

L'invention concerne un dispositif permettant le raccordement électrique d'une cellule d'accumulateur électrochimique comportant des terminaux de raccordement souples et plans.

L'invention propose plus particulièrement un dispositif de raccordement réversible permettant de ne pas endommager les terminaux de raccordement à chaque connexion ou déconnexion de la cellule d'accumulateur.

### ÉTAT DE LA TECHNIQUE ANTÉRIEURE

Une cellule d'accumulateur électrochimique à emballage souple, communément appelé "pouch" comporte un corps principal, qui est la partie active de la cellule, et qui est contenu dans un emballage permettant de rendre la cellule étanche à l'air extérieur et à l'électrolyte à l'intérieur de la cellule.

L'emballage est traversé par deux bornes de raccordement électrique du corps principal qui sont reliées à l'anode et à la cathode du corps principal, respectivement.

Chacune de ces bornes de raccordement consiste en une bande souple de matériau conducteur électrique. De préférence, l'épaisseur de chaque borne de raccordement est inférieure à 0.5mm.

Cette faible épaisseur des bornes de raccordement les rend fragiles, il est donc nécessaire de prévoir une solution pour le raccordement électrique de chaque borne à un autre dispositif, que ce soit à une borne de raccordement d'une autre cellule d'accumulateur ou à un autre composant, qui ne soit pas destructeur de la borne.

Cette solution doit notamment permettre une connexion/déconnexion de la borne de raccordement qui soit répétable et ayant un impact limité voire nul sur l'intégrité de la borne de raccordement.

Le document KR200465409U décrit une association de plusieurs cellules d'accumulateur par sertissage ou soudure des bornes de raccordement.

Une telle solution a pour aspect principal que les bornes de raccordement sont fortement endommagées dans le cas d'un démontage, limitant la possibilité d'un nouveau raccordement.

Le document EP3985769 décrit une association de plusieurs cellules d'accumulateur dans laquelle chaque cellule est reçue dans un cadre qui lui est associé et ce sont les cadres qui comportent des moyens de raccordement à un ou plusieurs autres cadres pour raccorder les cellules les unes aux autres.

Une telle solution est acceptable dans le sens que les bornes de raccordement des cellules ne sont pas endommagées lors des raccordement et déconnexions mais elle implique l'utilisation d'un grand nombre de ces cadres, ce qui implique par conséquent une augmentation de la masse et du volume final de l'ensemble comportant ces cellules.

Le document FR2793963 décrit un système de raccordement par l'intermédiaire de pinces de connexion qui enserrent chaque borne de raccordement entre deux doigts conducteurs.

Selon ce document, le serrage par chaque pince est localisé au niveau des doigts de serrage, ce qui résulte en un marquage de la borne de raccordement, limitant par conséquent la répétabilité des connexions/déconnexions des cellules.

L'invention a pour but de proposer un dispositif de raccordement électrique de cellules qui réalise un contact électrique avec chaque borne de raccordement sans endommager celle-ci.

### EXPOSÉ DE L'INVENTION

L'invention propose un dispositif de raccordement pour au moins une borne de cellule électrique, la borne se présentant sous la forme d'une feuille de matériau conducteur électrique orientée horizontalement,
caractérisé en ce que le dispositif de raccordement comporte :
- un boitier en matériau isolant électriquement délimitant au moins un logement primaire associé à ladite au moins une borne, dans lequel la borne est destinée à être reçue au moins en partie,
- un organe de contact qui est porté par le boitier et qui est réalisé en matériau conducteur électriquement, l'organe de contact comportant une extrémité qui est mobile dans le boitier entre une position de déconnexion dans laquelle il est destiné à être situé verticalement à distance de la borne et une position de connexion dans laquelle l'extrémité de l'organe de contact est destinée à être en appui verticalement contre la borne, et
- un outil de commande qui est mobile par rapport au boitier entre une position de déconnexion dans laquelle l'outil est situé à distance de l'organe de contact et une position de connexion dans laquelle l'outil coopère avec l'organe de contact et entraine l'organe de contact en déplacement depuis sa position de déconnexion vers la position de connexion.

De préférence, chaque logement primaire est délimité verticalement par une paroi horizontale qui est pleine et par une deuxième partie horizontale présentant une ouverture traversée par ledit au moins un organe de contact.

De préférence, le boitier comporte un logement secondaire qui est apte à recevoir une portion de l'outil et qui est séparé dudit au moins un logement primaire par la deuxième partie horizontale.

De préférence, le dispositif de raccordement comporte deux logements primaires et un organe de contact associé à chaque logement primaire et les deux logements primaires et leurs organes de contact associés sont disposés verticalement de part et d'autre du logement secondaire.

De préférence, l'organe de contact consiste en un doigt monté pivotant par rapport au boitier et qui comporte une extrémité qui est apte à venir en contact avec la borne lorsque l'organe de contact est en position de connexion.

De préférence, l'organe de contact est réalisé en un matériau déformable élastiquement qui comporte une position de repos correspondant à sa position de déconnexion vers laquelle il est rappelé élastiquement et qui est apte à être déformé élastiquement par l'outil pour être déplacé vers sa position de connexion.

De préférence, l'organe de contact est mobile par rapport au boitier au travers de l'ouverture.

De préférence, l'organe de contact comporte un tronçon intermédiaire qui est destiné à coopérer avec l'outil de commande.

De préférence, l'extrémité de l'organe de contact est courbée dans une première direction et le tronçon intermédiaire est courbé dans une deuxième direction.

De préférence, le rayon de courbure de l'extrémité ( de l'organe de contact est inférieur au rayon de courbure du tronçon intermédiaire.

De préférence, le dispositif de raccordement comporte une pluralité d'organes de contact qui sont destinés à venir en contact avec la dite borne, dans lequel les organes de contact sont décalés les uns par rapport aux autres selon une direction transversale, en formant un alignement.

De préférence, les organes de contact de ladite pluralité d'organes de contact sont réalisés d'une seule pièce à partir d'une lame en matériau conducteur qui est découpée et mise en forme.

De préférence, l'outil de commande comporte une barre de connexion réalisée en matériau conducteur électriquement qui est apte à être reçue dans le logement secondaire et qui est apte à coopérer avec l'organe de contact au moins pour provoquer un déplacement de l'organe de contact vers sa position de connexion lorsque la barre de connexion est reçue dans le logement secondaire.

De préférence, l'outil de commande comporte un ergot de raccordement à un conducteur électrique externe.

L'invention concerne aussi un procédé de raccordement d'au moins une cellule électrique comportant une borne se présentant sous la forme d'une feuille de matériau conducteur électrique orientée horizontalement à un dispositif de raccordement selon l'invention, qui comporte
une étape d'introduction de la borne dans le logement primaire du boitier ;
une étape de déplacement de l'outil de commande vers sa position de connexion dans laquelle l'outil coopère avec l'organe de contact pour que l'extrémité de l'organe de contact soit en contact et en appui contre la borne.

### BRÈVE DESCRIPTION DES DESSINS

[Fig. 1] est une représentation schématique en perspective d'une cellule destinée à coopérer avec un dispositif de raccordement selon l'invention.
[Fig. 2] est une représentation schématique d'une batterie comportant une pluralité de cellules 10 raccordées par des dispositifs de raccordement selon l'invention.
[Fig. 3] est une représentation schématique en perspective en éclaté de la liaison de deux bornes de deux cellules par un dispositif de raccordement selon l'invention.
[Fig. 4] est une représentation schématique d'une cellule destinée à être raccordée uniquement avec un conducteur électrique par un dispositif de raccordement selon l'invention.
[Fig. 5] est une représentation schématique en section selon un plan longitudinal vertical d'une liaison de deux bornes de deux cellules par un dispositif de raccordement selon l'invention, dans laquelle l'outil est dans une position rétractée.
[Fig. 6] est une vue similaire à celle de la figure 6, montrant le dispositif de raccordement avec l'outil dans une position insérée.
[Fig. 7] est une vue similaire à celle de la figure 6, montrant un dispositif de raccordement associé à une seule borne d'une cellule.
[Fig. 8] est une représentation schématique en perspective d'une lame en matériau conducteur comportant une pluralité de doigts de contact.

### EXPOSÉ DÉTAILLÉ DE L'INVENTION

Pour la description de l'invention, on adoptera à titre non limitatif les orientations selon le repère V, L, T indiqué aux figures correspondant respectivement à une direction verticale V, une direction longitudinale L et une direction transversale T.

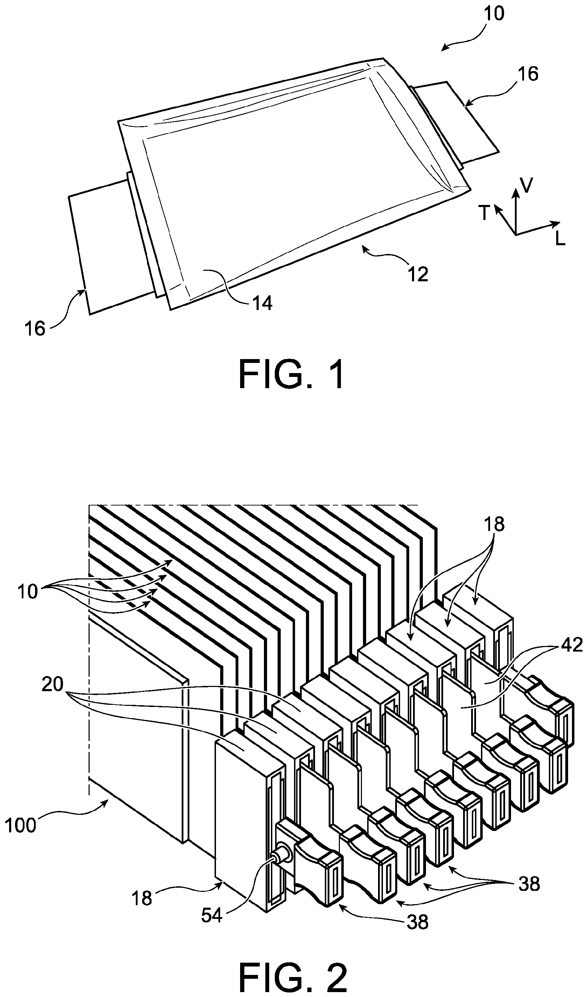

On a représenté à la figure 1 une cellule 10 destinée à faire partie d'une batterie d'accumulateur électrochimique 100 (représentée partiellement à la figure 2).

La cellule 10 comporte un corps principal 12 de forme principale parallélépipédique, qui constitue la partie active de la cellule 10 et qui est contenu dans un emballage 14 permettant de rendre la cellule 10 étanche à l'air extérieur et à l'électrolyte présent à l'intérieur de la cellule 10.

La cellule 10 comporte aussi deux bornes 16 de raccordement, dont chacune est reliée à une anode ou à une cathode (non représentées) du corps principal 12. Chaque borne 16 traverse l'emballage 14 pour s'étendre à l'extérieur de celui-ci.

Chaque borne 16 consiste en une feuille de matériau conducteur électrique dont l'épaisseur est d'environ 0.5mm. Ainsi, les bornes sont des composants particulièrement fragiles qui peuvent être endommagés aisément.

Lorsque la batterie d'accumulateur 100 est constituée, une pluralité de cellules 10 sont fournies et sont connectées les unes aux autres, et parallèle et/ou en série, par leurs bornes 16.

Pour cela, comme on peut le voir aux figures 2 et suivantes, un dispositif de raccordement 18 selon l'invention est utilisé pour raccorder électriquement deux bornes 16 de deux cellules 10 ou bien une borne 16 d'une cellule 10 d'extrémité à un connecteur externe.

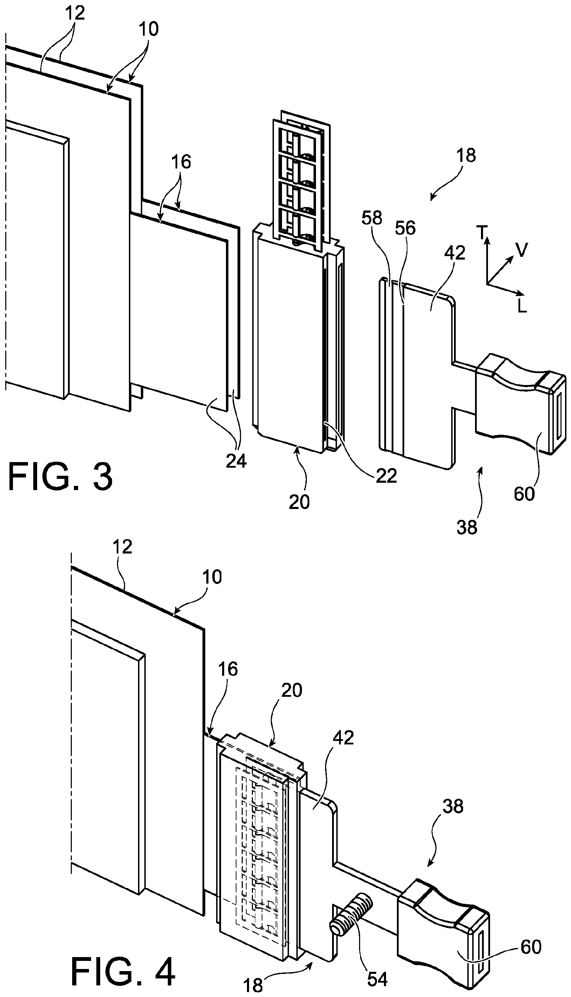

Comme on peut le voir plus en détails aux figures 3 et 4, le dispositif de raccordement 18 comporte un boitier 20 en matériau isolant électrique, dans lequel chaque borne 16 avec laquelle il est destiné à coopérer est reçue.

Dans la description qui va suivre, on adoptera à titre de convention une orientation horizontale des bornes 16. Il sera compris que l'invention n'est pas limitée à cette orientation et que les bornes 16 peuvent être orientées différemment dans la batterie sans sortir de l'invention.

De même, on considère ici, mais de manière non limitative, que chaque borne 16 s'étend selon la direction longitudinale à partir du corps principal 12 de la cellule 10.

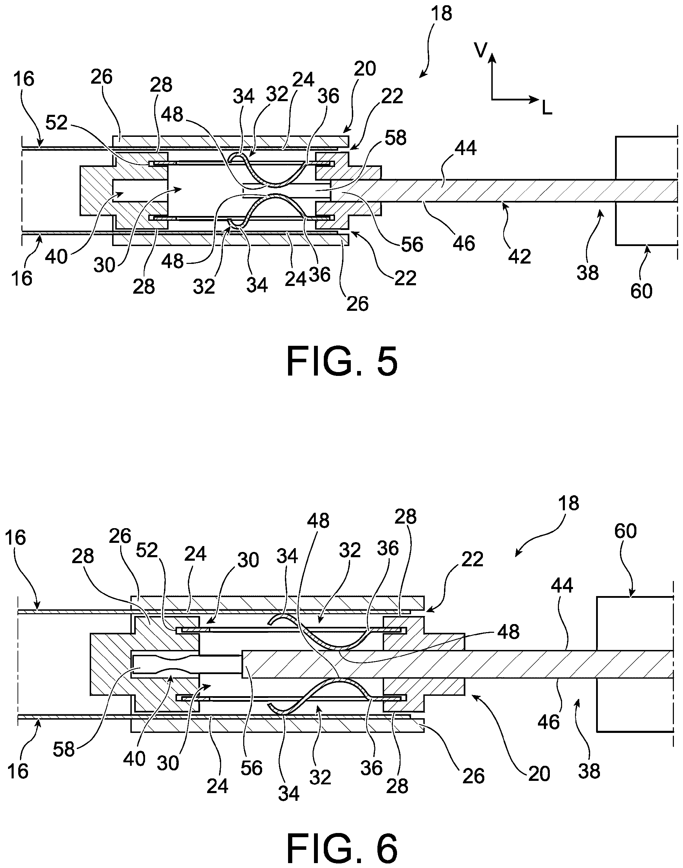

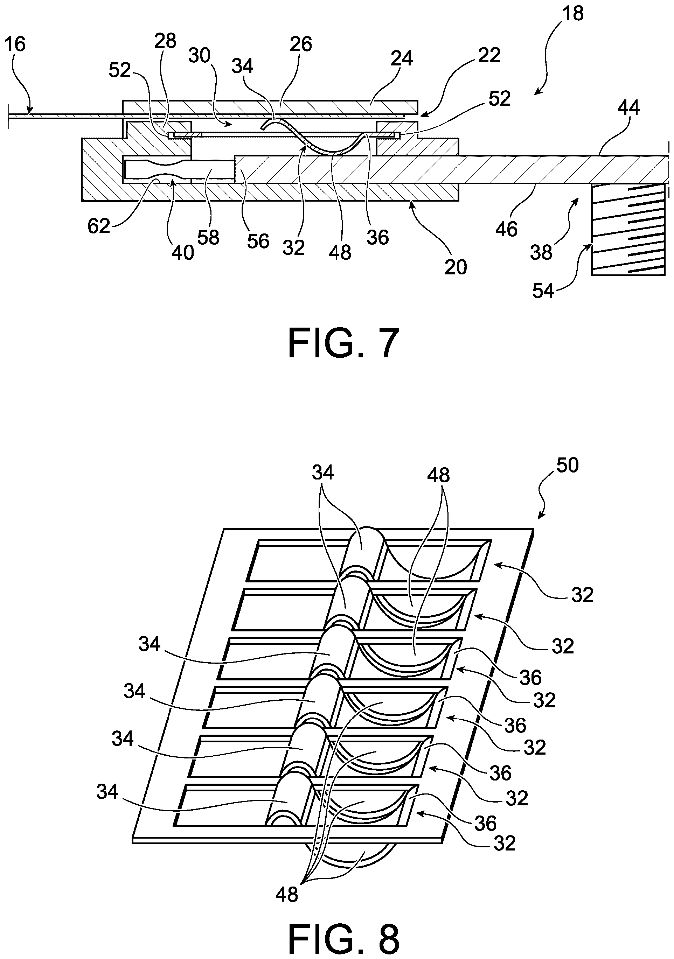

Comme on peut le voir aux figures 5 à 7, le boitier 20 délimite un logement primaire 22 associé à chaque borne 16. Ainsi, si le dispositif de raccordement 18 est destiné à raccorder deux bornes 16 l'une avec l'autre, il comporte deux logements primaires 22 et si le dispositif de raccordement 18 est destiné à raccorder une borne 16 à un connecteur externe, il comporte un seul logement primaire 22, comme on peut le voir à la figure 7.

Chaque logement primaire 22 est destiné à recevoir un tronçon d'extrémité libre 24 d'une borne 16. Le logement primaire 22 est de forme complémentaire à ce tronçon d'extrémité libre 24, c'est-à-dire qu'il est sensiblement plan et horizontal.

Dans le cas d'un boitier comportant deux logements primaires 22, ceux-ci sont parallèles l'un à l'autre et sont décalés verticalement. De préférence, le boitier 20 présente une symétrie par rapport à un plan horizontal médian, une partie du boitier 20 se déduit donc de l'autre partie par symétrie.

Dans la description qui va suivre, et sauf mention contraire, on se référera au raccordement d'un tronçon d'extrémité libre 24 d'une borne 16 dans un logement primaire 22 situé dans une partie verticalement supérieure du boitier 20.

Dans le cas d'un boitier 20 comportant deux logements primaires 22, et comme indiqué précédemment, le logement primaire 22 situé dans la partie inférieure du boitier 20 se déduira par symétrie par rapport au plan principal de symétrie.

Dans le cas d'un boitier 20 ne comportant qu'un logement primaire 22, la description qui va suivre s'appliquera à ce boitier 20.

Le logement primaire 22 est ouvert à ses extrémités longitudinales, pour permettre l'introduction du tronçon d'extrémité libre 24 par une ouverture, l'autre ouverture permettant d'éviter que le bord de la borne 16 ne vienne en butée longitudinale et ne se froisse.

Le logement primaire 22 est délimité par deux parties du boitier 20 entre lesquelles le tronçon d'extrémité libre 24 de la borne 16 associée au logement primaire 22 est positionné lorsqu'il est introduit dans le logement primaire 22.

Une première partie du boitier 20 consiste en une paroi horizontale 26 qui est pleine, la deuxième partie 28 du boitier 20 est une portion interne du boitier et elle comporte une ouverture 30 au travers de laquelle des organes de contact 32 sont disposés, comme on le verra plus en détails par la suite.

De préférence, la paroi horizontale 26 est située à une extrémité verticale du boitier 20. La deuxième partie 28 du boitier 20 est par conséquent située verticalement vers l'intérieur du boitier 20 par rapport à la paroi horizontale 26.

Dans le cas pour lequel le dispositif de raccordement 18 est destiné à raccorder deux bornes 16, le boitier 20 comporte deux logements primaires 22 qui sont ouverts en direction l'un de l'autre par les ouvertures 30. Le boitier 20 comporte à cet effet deux deuxièmes parties 28.

Comme on l'a dit précédemment, le dispositif de raccordement 18 comporte des organes de contact 32.

Ces organes de contact 32 sont destinés à venir en contact avec le tronçon d'extrémité libre 24 d'une borne 16 qui est reçu dans le logement primaire 22, lorsque le dispositif de raccordement 18 est dans une position de fermeture.

Selon le mode de réalisation représenté aux figures, chaque organe de contact 32 consiste en un doigt d'orientation principale longitudinale qui comporte une extrémité 34 destinée à venir en contact avec le tronçon d'extrémité libre 24 de la borne 16.

Chaque doigt 32 est monté mobile en déplacement dans le boitier 20 entre une position de connexion représentée aux figures 6 et 7, dans laquelle l'extrémité 34 du doigt 32 est en contact avec le tronçon d'extrémité libre 24 associé et une position de déconnexion représentée à la figure 5 dans laquelle l'extrémité 34 du doigt est située à distance verticalement du tronçon d'extrémité libre 24 associé.

De préférence, le doigt 32 est situé verticalement au-dessous du logement primaire 22 et le déplacement de l'extrémité libre 34 du doigt 32 consiste en un déplacement principalement vertical, vers le haut lors du déplacement vers la position de connexion et vers le bas lors du déplacement vers la position de déconnexion.

Lorsque le doigt 32 est en position de connexion, son extrémité 34 réalise un serrage du tronçon d'extrémité libre 24 de la borne 16 contre la paroi horizontale 26 du logement primaire 22.

L'intensité de l'appui de l'extrémité 34 du doigt 32 contre l'extrémité libre 24 de la borne 16 est définie pour garantir un raccordement électrique entre le doigt 32 et la borne 12, sans provoquer de déformation de la borne 16 par écrasement localisé.

De plus, l'extrémité 34 du doigt 32 est courbée et est bombée en direction de la paroi horizontale 26 du logement primaire 22 associé, c'est-à-dire que la partie bombée de l'extrémité 34 du doigt 32 est destinée à venir en appui contre l'extrémité libre 24 de la borne 16 qui lui est associée.

Chaque doigt 32 se déplace dans le boitier 20 au travers de l'ouverture 30 formée dans la deuxième partie 28 du boitier 20 . Ainsi, lorsque le doigt 32 est en position de déconnexion, l'extrémité 34 du doigt 32 est située à l'extérieur du logement primaire 22, permettant à la borne 16 de se déplacer longitudinalement dans le logement primaire 22.

De préférence, chaque doigt 32 consiste en un élément déformable élastiquement dont une deuxième extrémité 36 est fixée au boitier 20. Le déplacement du doigt 32 dans le boitier 20 consiste ainsi en pivotement autour de cette deuxième extrémité 36 fixe.

Aussi, le doigt 32 comporte une position de repos, c'est-à-dire une position vers laquelle il revient élastiquement lorsqu'il ne subit aucune sollicitation, et cette position de repos correspond à la position de déconnexion du doigt 32.

Le déplacement du doigt 32 depuis la position de connexion vers la position de déconnexion consiste par conséquent en un rappel élastique du doigt 32 vers sa position de repos.

Le déplacement du doigt 32 depuis sa position de déconnexion, c'est-à-dire de repos, vers sa position de connexion s'effectue par une action mécanique provenant d'un composant supplémentaire.

Le dispositif de raccordement 18 comporte à cet effet un outil 38 qui est destiné à être inséré dans un logement secondaire 40 réalisé dans le boitier 20 et qui permet de réaliser le déplacement du doigt 32 depuis sa position de déconnexion vers la position de connexion.

Le logement secondaire 40 est ouvert longitudinalement à une extrémité du boitier 20 qui est de préférence opposée à l'extrémité longitudinale du logement primaire 22 par laquelle le tronçon d'extrémité libre 24 de la borne 16 est introduit. Cela permet d'éviter tout contact direct entre l'outil 38 et la borne 16.

Le logement secondaire 40 est séparé du logement primaire 22 par la deuxième partie 28 du boitier 20 . Le logement secondaire 40 et le logement primaire 22 communiquent l'un avec l'autre par l'ouverture 30.

Lorsque l'outil 38 est introduit dans le logement secondaire 40, il coopère avec le doigt 32 pour provoquer un déplacement du doigt 32 depuis sa position de repos vers sa position de connexion.

Selon un mode de réalisation préféré, l'outil 38 comporte une barre de connexion 42 qui consiste en une barre plane et horizontale dotée d'une face supérieure 44 et d'une face inférieure 46. La face supérieure 44 est destinée à coopérer avec le doigt 32 pour provoquer un déplacement du doigt 32 depuis sa position de repos vers sa position de connexion.

A cet effet, le doigt 32 comporte un tronçon intermédiaire 48 qui est courbé de manière telle que le tronçon intermédiaire 48 est situé à l'intérieur du logement secondaire 40 et est bombé vers l'intérieur du logement secondaire 40. Le tronçon intermédiaire 48 du doigt 32 vient coopérer avec l'outil 38 en étant poussé vers le haut par la face supérieure 44 de la barre de connexion 42.

Le doigt 32 est ainsi constitué de deux tronçons courbés à savoir l'extrémité 34 et le tronçon intermédiaire 48, dont les rayons de courbure sont différents pour que chacun assure une fonction particulière.

Le tronçon intermédiaire 48 possède un plus grand rayon de courbure car il assure un plus grand déplacement et une progressivité à l'effort lors de l'insertion de l'outil 38.

L'extrémité 34 possède le plus petit rayon de courbure, ce qui permet d'effectuer un pincement ponctuel et précis sur la borne 16 mais sans l'endommager.

Aussi, les orientation de la courbure de l'extrémité 34 et du tronçon intermédiaire 48 sont différentes. En effet, l'extrémité 34 est courbée dans une direction orientée vers la paroi horizontale 26 du logement primaire 22 et le tronçon intermédiaire 48 est courbé dans une autre direction orientée vers l'intérieur du logement secondaire 40.

La barre de connexion 42 est réalisée en un matériau conducteur électrique. Ainsi, dans le cas d'un boitier 20 comportant deux logements primaires 22, la barre de connexion 42 réalise un raccordement électrique entre les doigts associés aux deux logements primaires 22, ce qui permet de raccorder électriquement les tronçons d'extrémité libre 24 des bornes 16 qui sont introduites dans les deux logements primaires 22.

Par ailleurs, la barre de connexion 42 peut être raccordée à un conducteur électrique externe par l'intermédiaire d'un ergot 54 représenté aux figures 4 et 7, permettant ainsi de raccorder la borne 16, ou les bornes 16, qui coopère avec le dispositif de raccordement 18.

Selon une variante de réalisation représentée aux figures 5 à 7, l'extrémité libre 56 la barre de connexion 42 est prolongée par une entretoise 58 réalisée en matériau isolant électriquement et qui est destinée à coopérer avec le doigt 32 lorsque le dispositif de raccordement est dans une position de déconnexion. L'épaisseur de l'entretoise 58, mesurée selon la direction verticale est inférieure à l'épaisseur de la barre de connexion 42 et elle est définie pour que lorsque le doigt 32 est en appui contre celle-ci, le doigt 32 est dans sa position de déconnexion.

L'entretoise 58 comporte aussi une forme en creux dans laquelle le tronçon intermédiaire 48 du doigt 32 est reçue lorsque l'outil 38 est dans sa position rétractée. De préférence, le fond de la forme en creux est conçu pour que le doigt 32 soit déformé élastiquement afin d'avoir un appui vertical du tronçon intermédiaire 48 contre l'entretoise. Cette coopération entre le tronçon intermédiaire 48 du doigt 32 et la forme en creux réalise un blocage en déplacement longitudinal de l'outil 38.

Ainsi, l'outil 38 est de préférence mobile par rapport au boitier 20 entre une position rétractée représentée à la figure 5, dans laquelle c'est l'entretoise 58 qui coopère avec le doigt 32 et dans laquelle le doigt 32 est dans sa position de déconnexion, et une position insérée représentée aux figures 6 et 7, dans laquelle c'est la barre de connexion 42 qui coopère avec le doigt 32 pour que le doigt 32 soit dans sa position de raccordement.

L'outil 38 comporte enfin une poignée 60 de manoeuvre qui est réalisé en matériau isolant électriquement et par lequel un opérateur est apte à manipuler l'outil 38 pour l'amener vers sa position de connexion ou vers sa position de déconnexion, sans que l'opérateur ne risque de recevoir accidentellement une décharge électrique.

Dans la description qui précède, on a fait référence à un seul doigt 32 qui est associé à chaque logement primaire 22.

Il sera compris que l'invention n'est pas limitée à ce mode de réalisation et que le dispositif de raccordement 18 peut comporter une pluralité de doigts 32 associés à chaque logement primaire 22.

A cet effet, selon le mode de réalisation représenté à la figure 8, le dispositif de raccordement 18 comporte une pluralité de doigts 32, ici au nombre de six, qui sont décalés les uns par rapport aux autres selon la direction transversale, en formant un alignement.

De préférence, l'ensemble des doigts 32 associés à un logement primaire 22 sont réalisés d'une seule pièce à partir d'une lame 50 en matériau conducteur qui est découpée et mise en forme pour obtenir les doigts 32.

Cette lame 50 est fixée au boitier 20 dans des gorges 52 formées dans les parois de l'ouverture 30 pour réaliser la fixation des doigts 32 au boitier 20.

La pluralité des doigts 32 associés à chaque logement primaire 22 permet de multiplier les zones de contact avec chaque tronçon d'extrémité libre 24 d'une borne 16 et avec la barre de connexion 42, assurant ainsi un bon raccordement électrique entre la barre de connexion 42 et le tronçon d'extrémité libre 24 d'une borne 16.

Comme on l'a dit précédemment, un dispositif de raccordement 18 peut être associé à la borne 16 d'une seule cellule 10 ou bien à deux bornes 16 dont chacune à l'une de deux cellules 10 à raccorder l'une à l'autre.

Dans ce deuxième cas, pour lequel le dispositif de raccordement 18 est associé à deux bornes 16, le boitier comporte deux logements primaires 22 qui sont séparés par un logement secondaire 40 recevant la barre de connexion 42.

La barre de connexion 42 est alors destinée à coopérer simultanément avec les doigts 32 associés aux deux logements primaires 22 et plus précisément, la barre de connexion 42 provoque un écartement verticalement des doigts 32 les uns par rapport aux autres, comme on peut le voir aux figures 5 et 6.

Les efforts ainsi produits dans le boitier 20 sont alors globalement symétriques. Aussi, la barre de connexion 42 étant réalisée en matériau conducteur électrique, elle réalise un raccordement électrique des doigts 32 les uns aux autres. Par conséquent, les deux bornes 16 reçues dans les deux logements primaires 22 sont raccordées par l'intermédiaire des doigts 32 et de la barre de connexion 42.

Dans le cas pour lequel le dispositif de raccordement 18 est associé à une seule borne 16, le boitier comporte un seul logement primaire 22 et un logement secondaire 40 recevant la barre de connexion 42. Dans ce cas, seule la face supérieure 44 de la barre de connexion 42 coopère avec les doigts 32 pour les déplacer verticalement vers le haut. La face inférieure 46 de la barre de connexion 42 s'appuie contre une face inférieure 62 du logement secondaire 40.

Dans la description qui va suivre on décrira les étapes de constitution d'une batterie 100 à partir d'une pluralité de cellules 10 en utilisant des dispositifs de raccordement 18 selon l'invention.

Premièrement, la pluralité de cellules 10 est pourvue, en disposant les cellules parallèlement les unes aux autres, par exemple en les empilant. Les bornes 16 des cellules 10 font saillie longitudinalement de chaque côté de l'empilement ainsi formé.

Ensuite, les cellules 10 sont raccordées les unes aux autres en utilisant les dispositifs de raccordement 18 selon l'invention, c'est-à-dire soit en reliant les bornes 6 de deux cellules 10 adjacentes par un dispositif de raccordement 18 comportant deux logements primaires, ou bien en reliant une borne 16 d'une cellule 10 d'extrémité à un conducteur électrique par un dispositif de raccordement 18 comportant un seul logement primaire 22 et par l'ergot 54 de la barre de connexion 42 associée.

Quel que soit le nombre de logements primaires 22 qu'un dispositif de raccordement 18 comporte, le raccordement de chaque borne 16 à une autre borne 16 d'une cellule adjacente ou à un conducteur électrique s'effectue de la même manière.

Tout d'abord, le dispositif de raccordement 18 est présenté avec l'outil 38 dans sa position rétractée dans laquelle l'entretoise 58 portée par la barre de connexion 42 coopère avec les doigts 32. Ainsi, les doigts 32 sont dans leur position de déconnexion.

Ensuite, chaque borne 16 est introduite dans le logement primaire 22 qui lui est destiné. Les doigts 32 étant dans leur position de déconnexion, ils sont situés à l'extérieur du logement primaire 22 et n'interfèrent pas avec cette introduction de la borne 16.

Dans cette position, le dispositif de raccordement 18 est pré-positionné sur la cellule 10. Le dispositif de raccordement 18 assure une isolation électrique de contact entre tout élément extérieur avec la borne de la cellule (présence d'isolants), et assure l'isolation électrique interne entre la borne de la cellule et la barre de connexion.

Lorsque chaque borne 16 est en position dans le logement primaire 22 qui lui est associé, l'outil 38 est déplacé vers sa position insérée dans laquelle la barre de connexion 42 coopère avec les doigts 32 pour que les doigts 32 soient dans leur position de raccordement.

Chaque doigt 32 est alors en appui verticalement contre la borne 16 qui lui est associée, réalisant ainsi le raccordement de la borne16 à la barre de connexion 42 et donc réalisant le raccordement de la borne 16 à une autre borne 16 ou à un conducteur électrique.

Cette opération est répétée à l'identique pour chaque autre paire de bornes 16 qui doivent être raccordées les unes aux autres.

Selon une variante de mise en oeuvre du dispositif de raccordement 18, après avoir pourvu la pluralité de cellules 10, en disposant les cellules parallèlement les unes aux autres, les dispositifs de raccordement 18 sont tous pré-positionnés sur les cellules 10.

Selon cette configuration, les dispositifs de raccordement 18 assurent une isolation électrique de contact de toutes les bornes des cellules. La batterie 100 qui est ainsi formée est prête à être connectée, sans que les bornes des cellules 10 ne soient exposées aux agressions extérieures.

Lorsque la batterie 100 doit être connectée, un utilisateur déplace successivement tous les outils 38 vers leurs positions insérées respectives.

Cette action de l'utilisateur est relativement simple à mettre en oeuvre et ne nécessite pas de compétences spécifiques.

Dans le cas d'une intervention sur une batterie 100, qui nécessiterait de déconnecter une cellule 10, les deux bornes 16 de celle-ci peuvent être déconnectées en intervenant uniquement sur les deux dispositifs de raccordement 18 qui sont associés aux bornes 16 de cette cellule.

Cette déconnexion s'effectue en déplaçant l'outil 38 de chaque dispositif de raccordement 18 vers sa position rétractée, ce qui permet aux doigts 32 de se déplacer vers leur position de déconnexion pour laquelle ils ne sont plus en contact avec les bornes.

Il est alors possible par la suite d'extraire chaque borne 16 de la cellule 10 hors du dispositif de raccordement 18 qui lui est associé.

Ces interventions de raccordement ou de déconnexion des cellules 10 sont réalisées manuellement par un opérateur et sont réalisées sans utilisation d'un outil supplémentaire. L'opérateur n'a que deux opérations à réaliser, à savoir l'introduction ou l'extraction de chaque borne dans/hors du logement primaire 22 et l'introduction ou l'extraction de chaque outil 38 dans le logement secondaire 40.

Il n'y a aucune opération supplémentaire de réglage qui pourrait être requise.

En outre, le circuit électrique formé par la succession des cellules 10 peut être aisément coupé par la déconnexion d'une seule cellule, c'est à dire en déplaçant un seul outil 38 parmi la multitude d'outils 38 présents, vers sa position rétractée.

Enfin, et comme on l'a indiqué précédemment, la connexion et la déconnexion de chaque cellule 10 sont réalisées de manière non destructive puisqu'il n'y a pas de déformation ni abrasion des bornes 16. Les cellules 10 peuvent ainsi être réutilisées à plusieurs reprises sans qu'il n'y ait de défaut de raccordement.

### NOMENCLATURE :

10 : cellule
12 : corps principal
14 : emballage
16 : borne
18: dispositif de raccordement
20: boitier
22 : logement primaire
24 : tronçon d'extrémité libre
26 : paroi horizontale
28 : deuxième partie du boitier
30 : ouverture
32: doigt
34: extrémité
36 : deuxième extrémité
38: outil
40 : logement secondaire
42 : barre de connexion
44 : face supérieure
46 : face inférieure
48 : tronçon intermédiaire
50 : lame
52: gorges
54 : ergot
56 : extrémité libre
58 : entretoise
60: poignée
62 : face inférieure
100 : batterie

## Revendications

1. Dispositif de raccordement (18) pour au moins une borne (16) de cellule (10) électrique, la borne (16) se présentant sous la forme d'une feuille de matériau conducteur électrique orientée horizontalement, **caractérisé en ce que** le dispositif de raccordement (18) comporte :
- un boitier (20) en matériau isolant électriquement délimitant au moins un logement primaire (22) associé à ladite au moins une borne (16), dans lequel la borne (16) est destinée à être reçue au moins en partie,
- un organe de contact (32) qui est porté par le boitier (20) et qui est réalisé en matériau conducteur électriquement, l'organe de contact comportant une extrémité (34) qui est mobile dans le boitier (20) entre une position de déconnexion dans laquelle il est destiné à être situé verticalement à distance de la borne (16) et une position de connexion dans laquelle l'extrémité (34) de l'organe de contact (32) est destinée à être en appui verticalement contre la borne (16), et
- un outil (38) de commande qui est mobile par rapport au boitier (20) entre une position de déconnexion dans laquelle l'outil (38) est situé à distance de l'organe de contact (32) et une position de connexion dans laquelle l'outil (38) coopère avec l'organe de contact (32) et entraine l'organe de contact (32) en déplacement depuis sa position de déconnexion vers la position de connexion.

2. Dispositif de raccordement (18) selon la revendication 1, **caractérisé en ce que** chaque logement primaire (22) est délimité verticalement par une première paroi horizontale (26) qui est pleine et par une deuxième partie horizontale (28) présentant une ouverture (30) traversée par ledit au moins un organe de contact (32).

3. Dispositif de raccordement (18) selon la revendication 2, **caractérisé en ce que** le boitier (20) comporte un logement secondaire (40) qui est apte à recevoir une portion (44) de l'outil (38) et qui est séparé dudit au moins un logement primaire (22) par la deuxième partie horizontale (28).

4. Dispositif de raccordement (18) selon la revendication 3, qui comporte deux logements primaires (22) et un organe de contact (32) associé à chaque logement primaire (22), **caractérisé en ce que** les deux logements primaires (22) et leurs organes de contact (32) associés sont disposés verticalement de part et d'autre du logement secondaire (40).

5. Dispositif de raccordement (18) selon l'une quelconque des revendications précédentes, **caractérisé en ce que** l'organe de contact (32) consiste en un doigt monté pivotant par rapport au boitier (20) et qui comporte une extrémité (34) qui est apte à venir en contact avec la borne (16) lorsque l'organe de contact (32) est en position de connexion.

6. Dispositif de raccordement (18) selon la revendication 5, **caractérisé en ce que** l'organe de contact (32) est réalisé en un matériau déformable élastiquement qui comporte une position de repos correspondant à sa position de déconnexion vers laquelle il est rappelé élastiquement et qui est apte à être déformé élastiquement par l'outil pour être déplacé vers sa position de connexion.

7. Dispositif de raccordement selon la revendication 5 ou 6, en combinaison avec la revendication 2, **caractérisé en ce que** l'organe de contact (32) est mobile par rapport au boitier (32) au travers de l'ouverture (30).

8. Dispositif de raccordement (18) selon l'une quelconque des revendications 5 à 7, **caractérisé en ce que** l'organe de contact (32) comporte un tronçon intermédiaire (48) qui est destiné à coopérer avec l'outil de commande (38).

9. Dispositif de raccordement (18) selon la revendication 8, **caractérisé en ce que** l'extrémité (34) de l'organe de contact (32) est courbée dans une première direction et le tronçon intermédiaire (48) est courbé dans une deuxième direction.

10. Dispositif de raccordement (18) selon la revendication 9, **caractérisé en ce que** le rayon de courbure de l'extrémité (34) de l'organe de contact (32) est inférieur au rayon de courbure du tronçon intermédiaire (48).

11. Dispositif de raccordement (18) selon l'une quelconque des revendications précédentes, **caractérisé en ce qu'**il comporte une pluralité d'organes de contact (32) qui sont destinés à venir en contact avec la dite borne (16) , dans lequel les organes de contact (32) sont décalés les uns par rapport aux autres selon une direction transversale, en formant un alignement.

12. Dispositif de raccordement (18) selon la revendication 11, **caractérisé en ce que** les organes de contact de ladite pluralité d'organes de contact (32) sont réalisés d'une seule pièce à partir d'une lame (50) en matériau conducteur qui est découpée et mise en forme.

13. Dispositif de raccordement (18) selon l'une quelconque des revendications précédentes, en combinaison avec la revendication 3, **caractérisé en ce que** l'outil de commande comporte une barre de connexion (42) réalisée en matériau conducteur électriquement qui est apte à être reçue dans le logement secondaire (40) et qui est apte à coopérer avec l'organe de contact (32) au moins pour provoquer un déplacement de l'organe de contact (32) vers sa position de connexion lorsque la barre de connexion (42) est reçue dans le logement secondaire (40).

14. Dispositif de raccordement (18) selon la revendication 13, **caractérisé en ce que** l'outil de commande comporte un ergot (54) de raccordement à un conducteur électrique externe.

15. Procédé de raccordement d'au moins une cellule (10) électrique comportant une borne (16) se présentant sous la forme d'une feuille de matériau conducteur électrique orientée horizontalement à un dispositif de raccordement (18) selon l'une quelconque des revendications précédentes, qui comporte
une étape d'introduction de la borne (16) dans le logement primaire (22) du boitier (20) ;
une étape de déplacement de l'outil de commande vers sa position de connexion dans laquelle l'outil (38) coopère avec l'organe de contact (32) pour que l'extrémité (34) de l'organe de contact (32) soit en contact et en appui contre la borne.
